# EUROPEAN PATENT APPLICATION

(11) **EP 4 845 276 A1**
(43) Date of publication of application: **25.11.2026**
(21) Application number: 25741893.9
(22) Date of filing: 10.01.2025
(51) Int. Cl.: H04W 72/0457, H04W 76/15, H04W 84/12, H04W 92/18

(54) **COMMUNICATION DEVICE, CONTROL METHOD, AND PROGRAM**

(30) Priority: 19.01.2024 JP 2024006983
(71) Applicant: Canon Kabushiki Kaisha, Tokyo 146-8501 (JP)
(72) Inventor: TACHIBANA, Hideaki, Tokyo 146-8501 (JP); NAKAGAWA, Toshiyuki, Tokyo 146-8501 (JP)
(74) Representative: Canon Europe Limited
(86) International application number: PCT/JP2025/000616
(87) International publication number: WO 2025/154667

(57) **Abstract**

A communication apparatus executes, in a case where the communication apparatus operates as a station complying with an IEEE 802.11 standard series and another communication apparatus operates as a station complying with the IEEE 802.11 standard series, a predetermined procedure for establishing a link to the other communication apparatus without intervention of an access point complying with the IEEE 802.11 standard series, wherein the execution means acquires, in the predetermined procedure, specifying information for specifying whether the other communication apparatus can execute multi-link communication for performing communication between stations using a plurality of links, and establishes a plurality of links in the predetermined procedure based on the specifying information indicating that the other communication apparatus can execute the multi-link communication.

## Description

### TECHNICAL FIELD

The present invention relates to a data communication technique in a communication apparatus capable of concurrently using a plurality of links.

### BACKGROUND ART

Along with a recent increase in amount of communicated data, communication techniques such as wireless LAN (Local Area Network) have been developed. As a major communication standard of the wireless LAN, the IEEE (Institute of Electrical and Electronics Engineers) 802.11 standard series is known. The IEEE 802.11 standard series include standards such as IEEE 802.11a/b/g/n/ac/ax. For example, in the latest IEEE 802.11ax standard, a technique for not only implementing high peak throughput of 9.6 gigabits per second (Gbps) at maximum but also improving the communication rate under congestion by using OFDMA (Orthogonal Frequency-Division Multiple Access) is standardized. Note that OFDMA is an abbreviation for Orthogonal Frequency-Division Multiple Access. PTL 1 discloses a technique for securing high frequency use efficiency while suppressing interference with another communication apparatus in a case where OFDMA is used.

To formulate a successor standard that aims at further improving throughput, frequency use efficiency, and a communication latency, a new task group for formulating the IEEE 802.11be standard in IEEE 802.11 Working Group has been established. In this task group, multi-link communication has been examined as one of new functions to be defined in the IEEE 802.11be standard. In multi-link communication, a communication apparatus called Multi-Link Device (MLD) concurrently uses a plurality of links by linking and coordinating a plurality of communication interfaces. For example, one access point (AP) communicates with one station (STA) via a plurality of communication links associated with different frequency channels. On the other hand, in Wi-Fi Alliance for formulating a certification program of a wireless LAN device, a WFD standard that defines a procedure of establishing a communication link between wireless LAN stations by exchanging communication parameters between the stations without intervention of an access point has been formulated. WFD is an abbreviation for Wi-Fi Direct.

### CITATION LIST

### PATENT LITERATURE

PTL 1: Japanese Patent Laid-Open No. 2023-51567

### SUMMARY OF INVENTION

### TECHNICAL PROBLEM

The present invention provides a technique of efficiently establishing a multi-link between station apparatuses capable of executing a communication link establishment procedure without intervention of an access point.

### SOLUTION TO PROBLEM

According to one aspect of the present invention, there is provided a communication apparatus comprising execution means for executing, in a case where the communication apparatus operates as a station complying with an IEEE 802.11 standard series and another communication apparatus operates as a station complying with the IEEE 802.11 standard series, a predetermined procedure for establishing a link to the other communication apparatus without intervention of an access point complying with the IEEE 802.11 standard series, wherein the execution means acquires, in the predetermined procedure, specifying information for specifying whether the other communication apparatus can execute multi-link communication for performing communication between stations using a plurality of links, and establishes a plurality of links in the predetermined procedure based on the specifying information indicating that the other communication apparatus can execute the multi-link communication.

### ADVANTAGEOUS EFFECTS OF INVENTION

According to the present invention, it is possible to efficiently establish a multi-link between station apparatuses capable of executing a communication link establishment procedure without intervention of an access point.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication system;
Fig. 2 is a sequence chart showing an example of a sequence between an AP and an STA when establishing a multi-link;
Fig. 3 is a view showing an example of the structure of a Reduced Neighbor Report element;
Fig. 4 is a sequence chart showing an example of a sequence when establishing a link between STAs using WFD processing;
Fig. 5 is a block diagram showing an example of the hardware configuration of a communication apparatus;
Fig. 6 is a block diagram showing an example of the functional configuration of the communication apparatus;
Fig. 7 is a flowchart illustrating an example of an operation procedure when the STA determines, in the WFD procedure, whether the partner STA supports multi-link communication;
Fig. 8A is a table showing an example of the structure of a Probe Request frame;
Fig. 8B is a table showing an example of the structure of a Probe Response frame;
Fig. 9A is a table showing an example of the structure of a Service Discovery Request frame;
Fig. 9B is a table showing an example of the structure of a Service Discovery Response frame;
Fig. 10A is a table showing an example of the structure of a GO Negotiation Request frame;
Fig. 10B is a table showing an example of the structure of a GO Negotiation Response frame;
Fig. 11A is a table showing an example of the structure of an Invitation Request frame;
Fig. 11B is a table showing an example of the structure of an Invitation Response frame;
Fig. 12 is a table showing an example of the structure of a WPS Information element; and
Fig. 13 is a sequence chart showing an example of a sequence when establishing a multi-link between the STAs using the WFD processing.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (System Configuration)

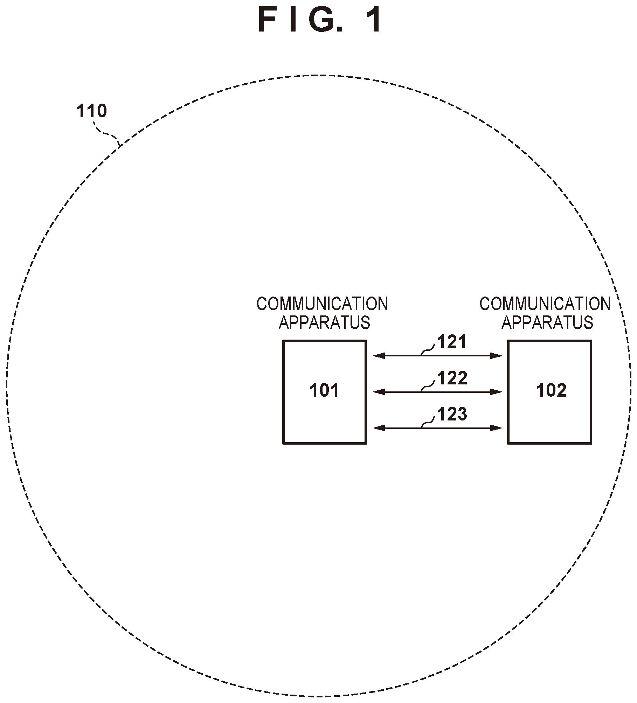

Fig. 1 shows an example of the configuration of a wireless communication system according to this embodiment. This wireless communication system includes two or more communication apparatuses. For example, the wireless communication system can be formed by a communication apparatus 101 and a communication apparatus 102. The communication apparatus 101 and the communication apparatus 102 will sometimes be referred to as communication apparatuses 100 without discriminating between them hereinafter. The communication apparatus 100 can be a wireless communication apparatus that can execute wireless communication complying with the IEEE 802.11 standard series including the IEEE 802.11be standard. The communication apparatus 100 can have the function of a station (STA) complying with the IEEE 802.11 standard series. Note that the communication apparatus 100 may have the function of an access point (AP) complying with the IEEE 802.11 standard series. Note that IEEE is an abbreviation for Institute of Electrical and Electronics Engineers. The IEEE 802.11be standard can also be called the EHT standard. EHT is an abbreviation for Extremely High Throughput. The IEEE 802.11 standard series can include the IEEE 802.11a/b/g/n/ac/ax standards. These standards can be called legacy standards. That is, the communication apparatus 100 can support one or more of the legacy standards in addition to the IEEE 802.11be standard. A network 110 formed by the communication apparatus 101 and the communication apparatus 102 indicates the range within which the communication apparatus 101 and the communication apparatus 102 can communicate with each other. That is, in the range of the network 110, the communication apparatus 102 can receive a signal transmitted from the communication apparatus 101, and the communication apparatus 101 can receive a signal transmitted from the communication apparatus 102. Note that the communication apparatus 100 may support other communication standards such as Bluetooth^{®}, NFC, UWB, ZigBee, and MBOA in addition to the IEEE 802.11 standard series. Note that UWB is an abbreviation for Ultra Wide Band, and MBOA is an abbreviation for Multi Band OFDM Alliance. Furthermore, NFC is an abbreviation for Near Field Communication. UWB includes wireless USB, wireless 1394, and WiNET. The communication apparatus 100 may support communication standards of wired communication such as a wired LAN.

Furthermore, the communication apparatus 100 can have a function of establishing a communication link in accordance with the Wi-Fi Direct standard (WFD). For example, in an establishment procedure complying with the WFD standard, one of the communication apparatus 101 and the communication apparatus 102 can serve as a Group Owner (GO) and the other can serve as a Client (CL). In this embodiment, assume that the communication apparatus 101 serves as a GO and the communication apparatus 102 serves as a CL. The communication apparatus 101 serving as a GO can provide communication parameters to the communication apparatus 102, thereby constructing the network 110. On the other hand, the communication apparatus 102 serving as a CL can receive the communication parameters from the communication apparatus 101, thereby joining the network 110. Note that the communication apparatus 102 may serve as a GO and the communication apparatus 101 may serve as a CL.

Note that Fig. 1 shows a state in which the two communication apparatuses 100 (communication apparatus 101 and communication apparatus 102) exist, but three or more communication apparatuses 100 may form the network 110. At this time, the communication apparatuses 100 may be connected to each other or one of the communication apparatuses 100 may serve as a hub to connect the remaining communication apparatuses 100. For example, the network 110 can be constructed based on communication parameters provided by the communication apparatus 101 serving as a GO, and the plurality of communication apparatuses 100 serving as CLs can join the network 110. In this case, the communication apparatus 101 can operate as a temporary AP. For example, the communication apparatus 101 can notify other communication apparatuses of the communication parameters by sending a Beacon frame. The communication apparatus 100 may be any electronic apparatus such as a smartphone, a tablet, a mobile phone, a PC, a video camera, a headset, a printer, or a display, but is not limited to these. The communication apparatus 100 may be an information processing apparatus such as a radio chip that can execute wireless communication complying with the IEEE 802.11be standard.

One of new functions being formulated in the IEEE 802.11be standard is multi-link communication. In the conventional IEEE 802.11 standard series, the communication apparatus 100 establishes a single link to a partner communication apparatus, and performs data communication. On the other hand, in multi-link communication, the communication apparatus 100 can improve throughput by concurrently performing data communications with a partner communication apparatus using two or more links. In the IEEE 802.11be standard, to extend a frequency band usable by the communication apparatus, it has been examined to support the 6-GHz band. That is, in the IEEE 802.11 standard series, the use of each of the 2.4-, 5-, 6-and 60-GHz frequency bands is defined and these can be used for multi-link communication. A plurality of frequency channels are defined in each frequency band, and for example, a channel using a 20-MHz bandwidth is defined as a frequency channel used for one radio link. Note that in the IEEE 802.11 standard series, by combining (bonding) the adjacent frequency channels, a bandwidth of 40 MHz or more can be used in one frequency channel. The communication apparatus 101 and the communication apparatus 102 can communicate with each other using bandwidths of 20 MHz, 40 MHz, 80 MHz, 160 MHz, and 320 MHz. The bandwidth used by the communication apparatus 100 is not limited to these, and other bandwidths of, for example, 240 MHz and 4 MHz may be used. As an example, the communication apparatus 100 can establish a link 121 to the partner communication apparatus using the first frequency channel in the 5-GHz band, and can perform communication. Furthermore, the communication apparatus 100 can establish a link 122 to the partner communication apparatus using the second frequency channel in the 6-GHz band, and can perform communication. In this case, the communication apparatus 100 can execute multi-link communication by using the second link 122 using the second frequency channel while maintaining the link 121 using the first frequency channel. As described above, according to this embodiment, the communication apparatus 101 and the communication apparatus 102 are configured to execute multi-link communication using a plurality of links in the network 110.

Referring to Fig. 1, three radio links (the links 121 and 122 and a link 123) are established between the communication apparatuses. As described above, the radio links may use different frequency bands. For example, the communication apparatus 101 and the communication apparatus 102 can concurrently establish the link 121 using the 5-GHz band, the link 122 using the 6-GHz band, and the link 123 using the 2.4-GHz band. The plurality of radio links may be formed by a plurality of different frequency channels belonging to the same frequency band. For example, the multi-link may be formed by a link using channel 15 in the 6-GHz band and a link using channel 207 in the 6-GHz band. Note that in this embodiment, "channel" is identification information used to identify a specific frequency channel. Furthermore, in the multi-link, a plurality of links that belong to the same frequency band and links that belong to frequency bands different from the frequency band of the links may be mixed. For example, the multi-link may be formed by the link 121 using channel 36 in the 5-GHz band, the link 122 using channel 149 in the 5-GHz band, and the link 123 using channel 15 in the 6-GHz band. When a plurality of links using different frequency channels are established between the AP 101 and the STA 102, even if any of the frequency channels is congested, it is possible to perform communication by the link using another frequency channel. Therefore, it is possible to avoid a decrease in throughput and an increase in delay.

A communication apparatus capable of performing multi-link communication is called a Multi-Link Device (MLD). A communication apparatus that operates as an AP or an STA complying with the IEEE 802.11be standard and has a function for operating as an MLD is called an AP MLD or an STA MLD. The STA MLD may be called a non-AP MLD. Note that in this embodiment, in a case where the communication apparatus 101 serving as a GO operates as an MLD, it may be called an AP MLD for the sake of convenience. This is because when the communication apparatus 101 constructs the network 110, it executes the function of providing communication parameters which is normally executed by the AP. The communication apparatus 101 is different from the AP complying with the IEEE 802.11 standard series in that the communication apparatus 101 does not constantly operate as an AP, and temporarily executes, through GO Negotiation, an operation that should be provided by the AP. On the other hand, in a case where the communication apparatus 102 serving as a CL operates as an MLD, it may be called an STA MLD for the sake of convenience. In the AP MLD or STA MLD, a wireless interface (I/F) forming each link can be called an Affiliated AP (A-AP) or Affiliated STA (A-STA). The Affiliated STA can also be called Affiliated non-AP STA. The A-APs are affiliated with the AP MLD and operate in different frequency channels. The A-STAs are affiliated with the STA MLD, and operate in different frequency channels. A state in which the A-AP or A-STA is affiliated with the AP MLD or the STA MLD may be said as a state in which the A-AP or A-STA belongs to the MLD. Note that the following embodiment will describe a case where multi-link communication is performed using the IEEE 802.11be standard, but the present invention is not limited to this. For example, the following discussion can be applied to multi-link communication complying with another wireless communication standard or multi-link communication using a plurality of wired links.

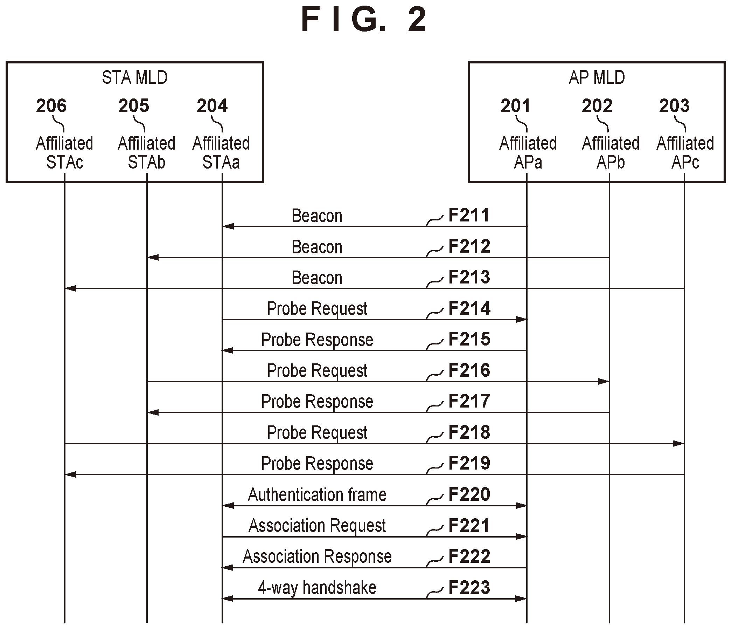

Fig. 2 shows an example of a sequence when establishing the multi-link between the AP MLD and the STA MLD complying with the IEEE 802.11be standard. The AP MLD includes an Affiliated APa (A-APa) 201, an A-APb 202, and an A-APc 203 as wireless I/Fs operating in frequency channels corresponding to the respective links. The STA MLD includes an Affiliated STAa (A-STAa) 204, an A-STAb 205, and an A-STAc 206 as wireless I/Fs operating in frequency channels corresponding to the respective links. The AP MLD and the STA MLD can be notified, by a Basic Multi-Link element, of information necessary to establish multi-link communication between the AP MLD and the STA MLD. For example, the AP MLD transmits a Beacon frame or Probe Response frame including the Basic Multi-Link element via each of the A-APa 201, the A-APb 202, and the A-APc 203 (F211 to F213). Note that the Probe Response frame can be transmitted in response to a Probe Request frame transmitted from the STA MLD (F214 to F219). On the other hand, the STA MLD notifies the AP MLD of the Basic Multi-Link element using an Association Request frame transmitted via the A-STA to be described later. The STA MLD can receive the Beacon frame or Probe Response frame via each of the A-STAa 204, the A-STAb 205, and the A-STAc 206. The STA MLD can detect that the partner communication apparatus is the AP MLD by confirming whether the received Beacon frame or Probe Response frame includes the Basic Multi-Link element. If the STA MLD detects that the partner communication apparatus is the AP MLD, the STA MLD acquires information of each A-AP belonging to the AP MLD from an RNR element included in the received Beacon frame or Probe Response frame. RNR is an abbreviation for Reduced Neighbor Report. Note that the RNR element can include frequency band and channel information used by each A-AP belonging to the same AP MLD. Alternatively, when the RNR element includes an identifier indicating that the AP MLD to which each A-AP belongs is the same, the STA MLD may detect that the partner communication apparatus is the AP MLD.

The STA MLD can establish the multi-link to the AP MLD using one of the A-STAs. For example, the STA MLD executes a procedure for establishing the multi-link to the A-APa 201 via the A-STAa 204. As a procedure for establishing the multi-link, the STA MLD requests establishment of the multi-link in exchanging an Association Request frame and an Association Response frame with the AP MLD (F220 to F222). For example, the STA MLD can request the AP MLD to establish the multi-link by transmitting the Association Request frame including the Basic Multi-Link element (F221). As an example, based on the information of each A-AP acquired from the RNR element, the STA MLD decides a frequency channel on which each A-STA operates. Then, by using the Basic Multi-Link element, the STA MLD notifies the AP MLD of information such as the frequency channel on which each A-STA operates. The AP MLD acquires, from the received Basic Multi-Link element, the information such as the frequency channel on which each A-STA operates. By returning the Association Response frame, the AP MLD can establish the multi-link between the AP MLD and the STA MLD (F222). This Association Response frame can store the Basic Multi-Link element including the information of the A-AP used for multi-link communication. The STA MLD switches, to the decided frequency channel, the frequency channel on which each A-STA operates. This can comprehensively establish links between the A-APs and the A-STAs without executing the link establishment procedure for each link. Note that the AP MLD and the STA MLD can execute exchange of security information and the like by a 4-way handshake procedure after the establishment of the multi-link (F223). Note that in a case where the partner communication apparatus is not the AP MLD, the STA MLD can establish connection using a single frequency channel.

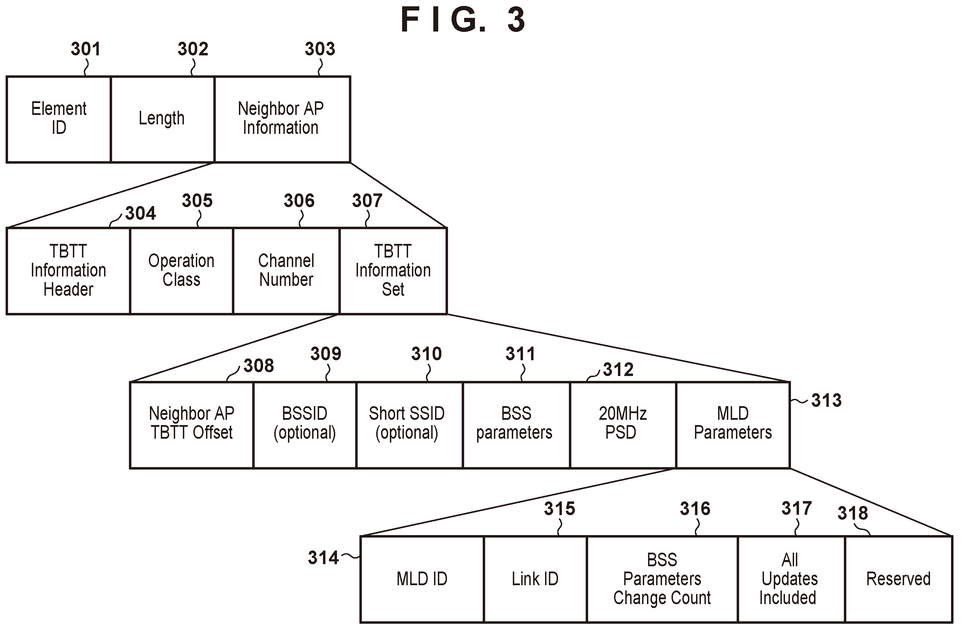

Fig. 3 shows an example of the RNR element. The RNR element can include an Element ID field 301, a Length field 302, and a Neighbor AP Information field 303. The Element ID field 301 indicates the type of the element. For example, for the RNR element, a value of 201 can be stored. The Length field 302 indicates the length of the element. The Neighbor AP Information fields 303, the number of which is equal to the number of APs about which the notification is made, can be arranged. Each Neighbor AP Information field 303 can include a TBTT Information Header field 304, an Operation Class field 305, and a Channel Number field 306. Each Neighbor AP Information field 303 can further include a TBTT Information Set field 307. The TBTT Information Header field 304 is header information indicating the length of each piece of TBTT Information included in the TBTT Information Set field 307 and the like. The Operation Class field 305 is used together with the Channel Number field 306, and indicates the start frequency of a primary channel used by the APs (APs about which the notification is made) associated with the Neighbor AP Information field 303. The TBTT Information Set field 307 can include a Neighbor AP TBTT Offset field 308, a BSSID field 309, a Short SSID field 310, and a BSS Parameters field 311. The TBTT Information Set field 307 can include a 20MHz PSD field 312 and an MLD Parameters field 313. The Neighbor AP TBTT Offset field 308 indicates information concerning the timing of a Beacon frame transmitted by the APs about which the notification is made. The BSSID field 309 indicates the identifier of a network formed by the APs about which the notification is made. The Short SSID field 310 indicates a value obtained by applying an SSID (Service Set Identifier) to a predetermined formula. The BSS Parameters field 311 indicates the parameters of the network formed by the APs about which the notification is made. The MLD Parameters field 313 can include an MLD ID field 314, a Link ID field 315, a BSS Parameters Change Count field 316, an All Updates Included field 317, and a Reserved field 318. The MLD ID field 314 indicates the identifier of the AP MLD to which the APs about which the notification is made belongs. In a case where the APs about which the notification is made belongs to the same AP MLD as the AP that has transmitted the RNR element, the value of the MLD ID field 314 can be set to 0. The Link ID field 315 indicates the link identifier of the APs about which the notification is made. The BSS Parameters Change Count field 316 indicates a period until the network parameters are changed in the APs about which the notification is made. The All Updates Included field 317 is set to 1 in a case where all elements updated in the latest parameter update are included. The Reserved field 318 is a reserved field.

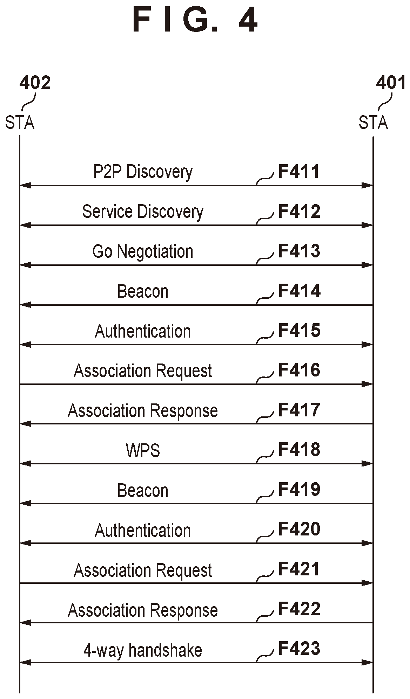

On the other hand, Wi-Fi Alliance has formulated the WFD standard that defines a procedure of establishing a communication link between STAs by exchanging communication parameters between the STAs without intervention of an AP. WFD is an abbreviation for Wi-Fi Direct. Fig. 4 shows an example of a sequence when establishing a communication link between an STA 401 and an STA 402 using the communication link establishment procedure in the WFD standard. The STA 401 and the STA 402 will sometimes be referred to as STAs 400 without discriminating between them hereinafter. In addition, the communication link establishment procedure in the WFD standard will sometimes be referred to as WFD processing hereinafter. First, when the WFD processing is started, the STA 400 executes P2P Discovery (F411). P2P Discovery can be called Device Discovery. In P2P Discovery, the STA 400 detects another STA by repeating a Search state and a Listen state. In the Search state, the STA 400 transmits a Probe Request frame, and waits for a Probe Response frame to the Probe Request frame. In the Listen state, the STA 400 waits for a Probe Request frame from another STA, and, upon receiving the Probe Request frame, transmits a Probe Response frame to it. The STA 400 can detect a partner STA by receiving the Probe Response frame while these operations are repeated. Note that the STA 400 can execute transition between the Search state and the Listen state while changing an operating frequency channel among usable frequency channels.

Next, the STA 401 and the STA 402 execute Service Discovery to recognize each other's service information (F412). The STA 400 transmits a Service Discovery Request frame, and receives a Service Discovery Response frame to it. By exchanging these wireless frames, each other's service information can be recognized. Note that Service Discovery may be skipped as an optional function.

Subsequently, the STA 401 and the STA 402 execute a Group Formation procedure. The STA 401 and the STA 402 execute Go Negotiation to decide their roles (F413). By executing Go Negotiation, one of the STAs 400 serves as a GO and the other serves as a CL. Go Negotiation can be executed by exchanging a GO Negotiation Request frame, a Go Negotiation Response frame, and a Go Negotiation Confirm frame.

After the roles of the STA 401 and the STA 402 are decided by Go Negotiation, a P2P Group Session is executed. For example, if the STA 401 serves as a GO, the STA 401 starts to transmit a Beacon frame (F414). The STA 402 transmits an Authentication frame, and the STA 401 returns an Authentication frame in response to it (F415). The STA 402 transmits an Association Request frame (F416), and the STA 401 returns an Association Response frame in response to it (F417). Then, the STA 401 serves as a WSC Register and the STA 402 serves as a WSC Enrollee, thereby executing exchange of the communication parameters (F418). The exchange of the communication parameters may be called WPS (Wi-Fi Protected Setup), and can be executed when the STA 401 issues authentication to the STA 402. For example, in WPS, the communication parameters can be exchanged by exchanging an EAP Request frame and an EAP Response frame. Group formation is completed by this procedure. EAP is an abbreviation for Extensible Authentication Protocol.

Upon completion of group formation, the STA 401 and the STA 402 establish a communication link. The STA 401 periodically transmits the Beacon frame (F419). The STA 402 transmits an Authentication frame, and the STA 401 returns an Authentication frame in response to it (F420). The STA 402 transmits an Association Request frame (F421), and the STA 401 returns an Association Response frame in response to it (F422). The STA 401 and the STA 402 can execute authentication by 4-Way Handshake, or the like. By executing this WFD processing, it is possible to establish a communication link between the STA 401 and the STA 402 without intervention of an AP.

As described above, in a case where the communication apparatus 101 and the communication apparatus 102 support the WFD processing, it is possible to establish a communication link between the communication apparatuses without intervention of an access point. Then, in a case where the communication apparatus 101 and the communication apparatus 102 support the multi-link communication function, it is possible to perform multi-link communication by establishing a plurality of links. Since the WFD processing is a procedure of establishing one communication link, useless processing may occur before the multi-link is established. For example, to establish a plurality of links, it is necessary to perform group formation between each A-AP and each A-STA. In the IEEE 802.11be standard, since a procedure of performing group formation between STAs is not defined, it is necessary to establish the multi-link after executing the WFD processing for each combination of the A-AP and the A-STA and executing group formation. In this case, processing executed as a whole until the multi-link is established between the communication apparatuses increases, and the required time may also increase. For example, if the multi-link is established after completion of group formation of the WFD processing for each combination of the A-AP and the A-STA, it takes time to execute some group formation, and thus establishment of the links between the communication apparatuses may not be completed. In each link, if the roles of the GO and the CL are reversed between the communication apparatuses, multi-link communication may not work correctly.

In this embodiment, in consideration of the above situation, in a predetermined procedure for establishing a link between STAs, the communication apparatus 100 acquires specifying information for specifying whether the partner communication apparatus can execute multi-link communication. Then, the communication apparatus 100 establishes a plurality of links by the predetermined procedure based on the specifying information indicating that the partner communication apparatus can execute multi-link communication. For example, this operation can be executed in a case where the communication apparatus 100 operates as an STA complying with the IEEE 802.11 standard series and the other communication apparatus also operates as an STA complying with the IEEE 802.11 standard series. In this case, the predetermined procedure is executed without intervention of an access point complying with the IEEE 802.11 standard series. Note that multi-link communication between the STAs may be multi-link communication complying with the IEEE 802.11 standard series, but is not limited to this, and need only be multi-link communication between STAs using a plurality of links. Furthermore, in the predetermined procedure for establishing the link between STAs, the communication apparatus 100 makes a notification of specifying information for specifying whether the self-apparatus can execute multi-link communication. Then, the communication apparatus 100 establishes a plurality of links by the predetermined procedure based on the fact that the self-apparatus can execute multi-link communication.

For example, the communication apparatus 100 can acquire specifying information by receiving a Reduced Neighbor Report (RNR) element included in a wireless frame used for the P2P Discovery procedure in the WFD processing. The P2P Discovery procedure can be called a Device Discovery procedure. For example, the wireless frame used for the P2P Discovery procedure can be a Probe Request frame or a Probe Response frame. Furthermore, the communication apparatus 100 can acquire specifying information by receiving a Basic Multi-Link element included in a wireless frame used for the P2P Discovery procedure, instead of or in addition to the RNR element. By notifying each other whether the partner communication apparatus can execute multi-link communication in the initial procedure of the WFD processing executed between the communication apparatuses, it is possible to efficiently execute a subsequent procedure. In a case where, for example, the partner communication apparatus can execute multi-link communication, the communication apparatus 100 can collectively execute the subsequent procedure by only one A-AP or A-STA belonging to the MLD, as will be described later. This can omit the processing of other A-APs or A-STAs, thereby reducing the power consumption and shortening the required time until the links between the communication apparatuses are established.

### (Apparatus Configuration)

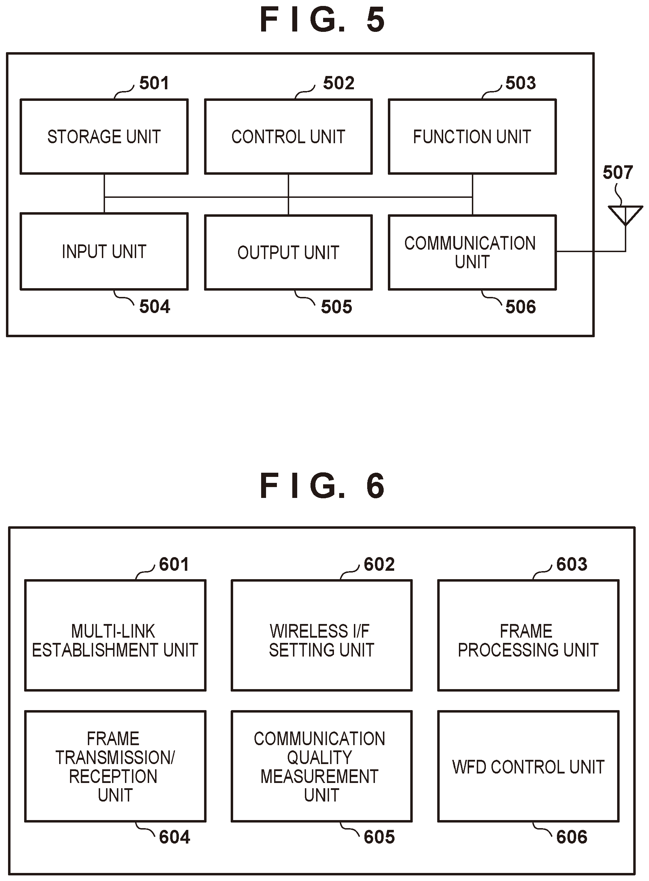

Fig. 5 shows an example of the hardware configuration of the communication apparatus 100 according to this embodiment. The communication apparatus 100 includes a storage unit 501, a control unit 502, a function unit 503, an input unit 504, an output unit 505, a communication unit 506, and an antenna 507. Note that a plurality of antennas may be provided. The storage unit 501 is formed by one or more memories such as a ROM and a RAM, and stores computer programs for performing various operations to be described later, and various kinds of information such as communication parameters for wireless communication. ROM is an abbreviation for Read Only Memory, and RAM is an abbreviation for Random Access Memory. Note that other than the memories such as a ROM and a RAM, a storage medium such as a flexible disk, a hard disk, an optical disk, a magnetooptical disk, a CD-ROM, a CD-R, a magnetic tape, a nonvolatile memory card, or a DVD may be used as the storage unit 501. The storage unit 501 may include a plurality of memories. Note that the storage unit 501 can record information concerning the state of the self-apparatus such as setting information input from the user to the self-apparatus, the remaining amount of a battery provided in the self-apparatus, and information indicating whether a power-saving operation is executed.

The control unit 502 is formed by, for example, one or more processors such as a CPU and an MPU, and controls the whole AP 101 or STA 102 by executing the computer programs stored in the storage unit 501. Note that the control unit 502 may control the whole AP 101 or STA 102 by cooperation of the computer programs stored in the storage unit 501 and an OS (Operating System). In addition, the control unit 502 generates data and signals (wireless frames) to be transmitted in communication with another communication apparatus. Note that CPU is an abbreviation for Central Processing Unit and MPU is an abbreviation for Micro Processing Unit. In addition, the control unit 502 may include a plurality of processors such as a multi-core processor, and controls the whole communication apparatus 100 by the plurality of processors. In addition, the control unit 502 controls the function unit 503 to execute wireless communication and predetermined processing such as image capturing, printing, or projection. The function unit 503 is hardware used by the communication apparatus 100 to execute predetermined processing.

The input unit 504 accepts various kinds of operations from the user. The output unit 505 performs various kinds of outputs to the user via a monitor screen or a loudspeaker. In this example, the output by the output unit 505 includes display on the monitor screen, audio output by the loudspeaker, and vibration output. Note that both the input unit 504 and the output unit 505 may be implemented by one module, like a touch panel. Furthermore, each of the input unit 504 and the output unit 505 may be integrated with the communication apparatus 100, or may be a separate body.

The communication unit 506 controls wireless communication complying with the IEEE 802.11be standard. In addition to the IEEE 802.11be standard, the communication unit 506 may control wireless communication complying with another IEEE 802.11 standard series or control wired communication by a wired LAN or the like. The communication unit 506 controls the antenna 507 to transmit/receive signals for wireless communication generated by the control unit 502. The communication unit 506 may be formed by a plurality of communication circuits respectively corresponding to a plurality of links. Note that if the communication apparatus 100 supports the NFC standard or Bluetooth standard in addition to the IEEE 802.11be standard, it may control wireless communication complying with these communication standards. If the communication apparatus 100 can execute wireless communication complying with a plurality of communication standards, it may individually include the communication units and the antennas supporting the respective communication standards. The communication apparatus communicates data such as image data, document data, or video data with the partner communication apparatus via the communication unit 506. Note that the antenna 507 may be formed separately from the communication unit 506 or may be formed as one module combined with the communication unit 506.

The antenna 507 is an antenna configured to allow communication in the 2.4-GHz band, the 5-GHz band, the 6-GHz band, and the like. In this embodiment, two or more antennas may be provided. If the communication unit 506 is formed by a plurality of communication units, antennas respectively corresponding to the communication units may be provided. Alternatively, antennas different for the respective frequency bands may be provided.

Fig. 6 is a block diagram of the functional configuration of the communication apparatus 100 according to this embodiment. The communication apparatus can include a multi-link establishment unit 601, a wireless I/F setting unit 602, a frame processing unit 603, a frame transmission/reception unit 604, a communication quality measurement unit 605, and a WFD control unit 606. The multi-link establishment unit 601 controls communication start processing for establishing one or more links used by the communication apparatus to execute wireless communication with the partner communication apparatus, control processing of a function related to the multi-link, processing of adding or deleting a link after the start of communication, and communication end processing of deleting all the links. For example, connection processing can be formed by Authentication processing, Association processing, and 4-Way-Hand-Shake (4WHS) processing. The wireless I/F setting unit 602 performs communication setting for each link. For example, the wireless I/F setting unit 602 performs setting of a frequency channel used by each wireless I/F, setting of information of the wireless I/F of the partner communication apparatus, and the like. In accordance with the setting of the wireless I/F setting unit 602, the frame processing unit 603 generates a frame to be transmitted. For example, the frame processing unit 603 of the STA serving as a GO generates a Beacon frame, a Probe Response frame, or the like including the Basic Multi-Link element and the RNR element. The frame processing unit 603 of the STA serving as a GO also generates an Authentication frame, an Association Response frame, or the like. On the other hand, the frame processing unit 603 of the STA serving as a CL generates a Probe Request frame, an Association Request frame, or the like including the Basic Multi-Link element and the RNR element. Furthermore, the frame processing unit 603 processes a frame received from the partner communication apparatus, and acquires information. For example, the frame processing unit 603 acquires, from the Basic Multi-Link element and the RNR element of the received Probe Request frame, Probe Response frame, or the like, information indicating that multi-link communication can be executed. In accordance with an instruction from the wireless I/F setting unit 602, the transmission/reception unit 604 transmits wireless frames including a data frame and the Beacon frame or Probe Response frame generated by the frame processing unit 603 and receives wireless frames from the partner apparatus. The communication quality measurement unit 605 measures and calculates communication quality using the Beacon frame or Probe Response frame received by the frame transmission/reception unit 604. The WFD control unit 606 executes WFD processing with the partner communication apparatus. For example, the WFD control unit 606 can execute generation of a wireless frame to be used for the WFD processing, determination of the roles of the GO and CL, exchange of the communication parameters using WPS or DPP, and the like. Note that DPP is an abbreviation for Device Provisioning Protocol.

### (Procedure of Processing)

Subsequently, the procedure of the above-described processing executed by the communication apparatus 100, a sequence in the wireless communication system, and the like will be described.

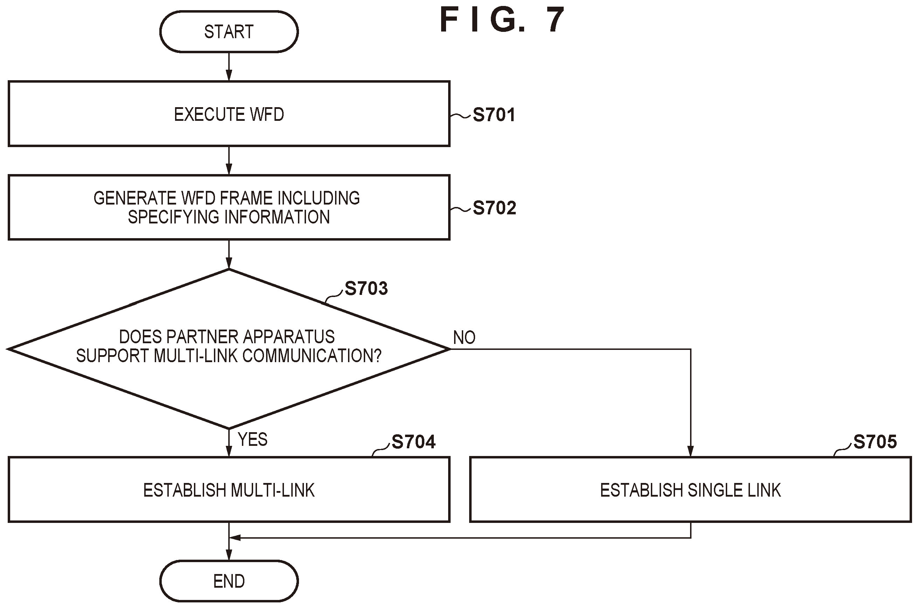

Fig. 7 is an example of a flowchart when the communication apparatus 100 determines whether to execute multi-link communication in the WFD processing. The communication apparatus 100 starts the WFD processing under the control of the WFD control unit 606 (step S701). For example, the communication apparatus 100 executes the P2P Discovery procedure, the Service Discovery procedure, the Group Formation procedure, and the like. At this time, in one or more of these procedures, the communication apparatus 100 generates a wireless frame including specifying information indicating that the self-apparatus can execute multi-link communication, and transmits the wireless frame (step S702). For example, the communication apparatus 100 can generate a wireless frame by including the specifying information in a Probe Request frame or Probe Response frame in the P2P Discovery procedure. For example, the communication apparatus 100 can generate a wireless frame by including the specifying information in a Service Discovery Request frame or Service Discovery Response frame in the Service Discovery procedure. For example, the communication apparatus 100 can generate a wireless frame by including the specifying information in a Go Negotiation Request frame, Go Negotiation Response frame, or Go Negotiation Confirm frame in the Group Formation procedure. For example, the communication apparatus 100 can generate a wireless frame by including the specifying information in an Invitation Request frame or Invitation Response frame in the P2P Invitation procedure. For example, the communication apparatus 100 can generate a wireless frame by including the specifying information in an EAP Request frame or EAP Response frame in the WPS procedure. Note that the communication apparatus 100 can generate a wireless frame by including the specifying information in a Probe Request frame, Probe Response frame, Authentication frame, Association Request frame, or Association Response frame at the time of wireless connection. The specifying information can be, for example, the RNR element or the Basic Multi-Link element. The specifying information is not limited to these, and may be, for example, a new information element indicating that multi-link communication can be executed between STAs.

Then, by receiving the specifying information transmitted by the partner communication apparatus, the communication apparatus 100 determines whether the partner communication apparatus supports multi-link communication (step S703). For example, if the Basic Multi-Link element is detected in the received wireless frame, the communication apparatus 100 can determine that the partner communication apparatus supports multi-link communication. If a plurality of RNR elements set with an MLD ID of 0 are detected, the communication apparatus 100 can determine that the partner communication apparatus supports multi-link communication. If it is determined that the partner communication apparatus supports multi-link communication (YES in step S703), the communication apparatus 100 executes processing for establishing a multi-link (step S704). Note that if it is determined that the partner communication apparatus supports multi-link communication, the communication apparatus 100 can collectively execute the WFD processing, as will be described later. On the other hand, if it is determined that the partner communication apparatus supports multi-link communication (NO in step S703), the communication apparatus 100 executes processing for establishing a single link (step S705).

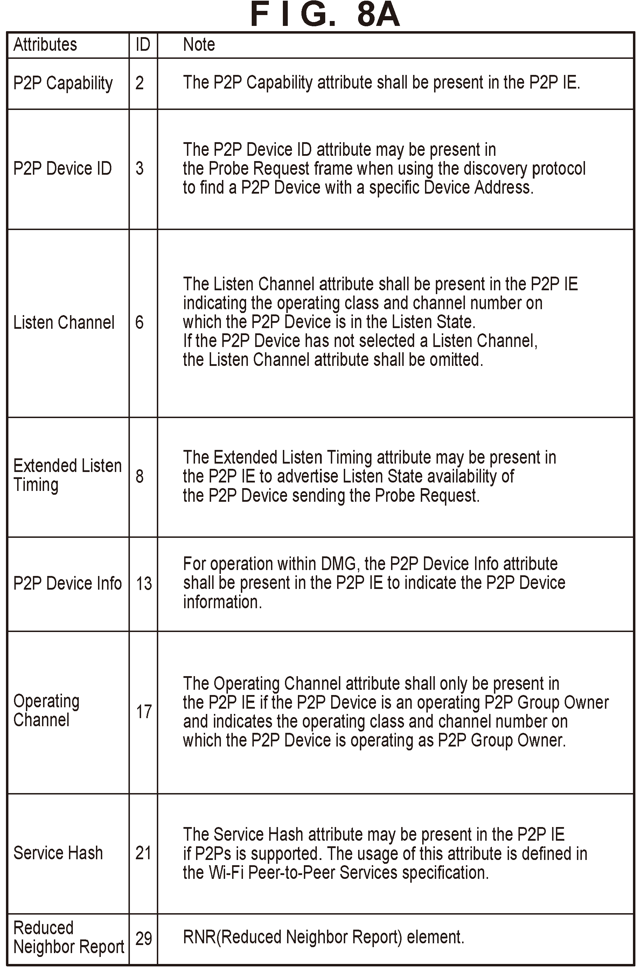

An example of information included in each frame used by the communication apparatus 100 for the WFD processing will be described. Note that if the same information (Attributes and the like) is included in a plurality of frames, a description thereof will be omitted. Fig. 8A shows an example of information (Attributes) included in the Probe Request frame in the P2P Discovery procedure. The Probe Request frame can include a P2P Capability Attribute, a P2P Device ID Attribute, and a Listen Channel Attribute. The P2P Capability Attribute can be used to establish P2P connection. For example, by using a Device Capability Bitmap included in the P2P Capability Attribute, the communication apparatus 100 can make a notification that it supports multi-link communication. As an example, if a frame including the P2P Capability Attribute on which a Reserved bit in the Device Capability Bitmap is set to 1 is received, the communication apparatus 100 can determine that multi-link communication is possible. The P2P Device ID Attribute can include the P2P device address of the communication apparatus 100. The Listen Channel Attribute can include a channel on which Listen is performed and information of an Operation Class. The Probe Request frame can include an Extended Listen Timing Attribute, a P2P Device Info Attribute, and an Operating Channel Attribute. The Extended Listen Timing Attribute can be used to communicate a Listen state usable timing. The P2P Device Info Attribute can include information of the communication apparatus 100. The Operating Channel Attribute can include information of an Operating Channel and an Operating Class.

Furthermore, the Probe Request frame can include a Service Hash Attribute and a Reduced Neighbor Report Attribute. The Service Hash Attribute can be used to check the presence/absence of a P2P service in the paired communication apparatus. The Reduced Neighbor Report Attribute can include all or part of information included in the Reduced Neighbor Report element in Fig. 3. For example, the Reduced Neighbor Report Attribute can include information included in the Neighbor AP Information field 303. For example, the Reduced Neighbor Report Attribute can include information such as the Operation Class field 305, the Channel Number field 306, and the MLD Parameters field 313. Note that the Reduced Neighbor Report Attribute can include information corresponding to each A-AP or A-STA included in the self-apparatus. For example, the Reduced Neighbor Report Attribute transmitted from the communication apparatus 102 can include information of each of the A-STAa 204, the A-STAb 205, and the A-STAc 206. Note that Fig. 8A shows 29 as the ID of the Reduced Neighbor Report, but the present invention is not limited to this, and any value can be used. Instead of or in addition to the Reduced Neighbor Report Attribute, an Attribute corresponding to the Basic Multi-Link element may be included. The Attribute corresponding to the Basic Multi-Link element can be called a Basic Multi-Link Attribute or a Multi-Link Attribute. The Basic Multi-Link Attribute can include, for example, information indicating whether the self-apparatus supports the multi-link or a parameter necessary for this operation. For example, this information can be called MLD Capabilities and Operations information. The Basic Multi-Link Attribute can include information of each A-AP or A-STA forming the link. The information can be called STA Control, STA Info, or STA Profile. For example, the STA Control can include a Link ID for identifying the link of the target A-STA. The STA Info can include the MAC address of the target A-STA. The STA Profile can include the function parameter or operation parameter of the target A-STA. Note that the communication apparatus 100 can make a notification of information directly indicating that the self-apparatus can execute multi-link communication, instead of or in addition to the Reduced Neighbor Report Attribute. In this case, the information concerning each A-AP or A-STA can be notified using another frame, another Attribute, or the like.

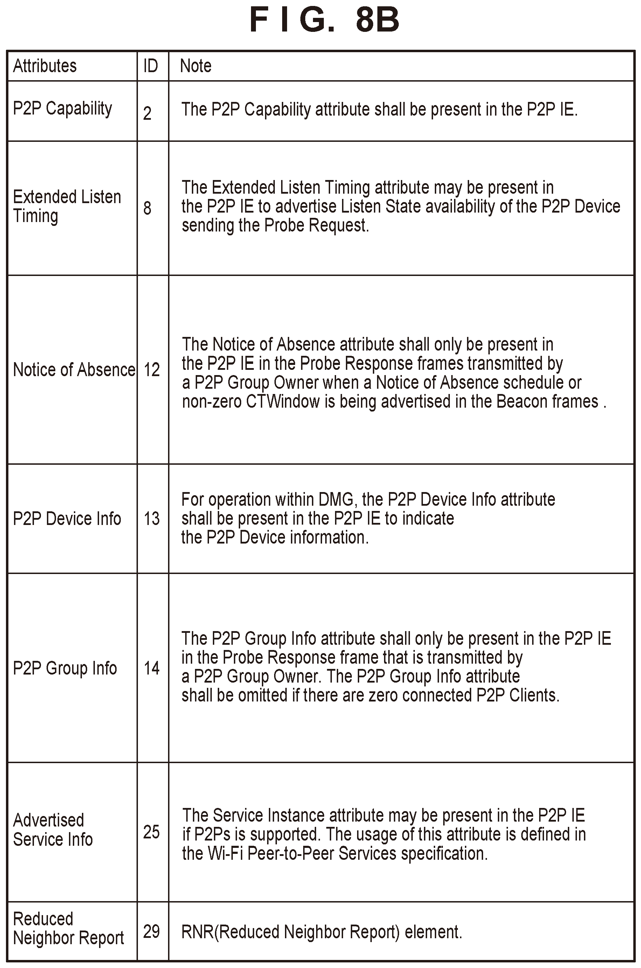

Fig. 8B shows an example of information (Attributes) included in the Probe Response frame in the P2P Discovery procedure. The Probe Response frame can include a P2P Capability Attribute, an Extended Listen Timing Attribute, and a Notice of Absence Attribute. The Notice of Absence Attribute can be used to make a notification of a timing at which the GO cannot be used due to a power-saving operation or the like. Furthermore, the Probe Response frame can include a P2P Device ID Attribute and a P2P Group Info Attribute. The P2P Group Info Attribute can include information of the CL as a member of a P2P Group. In addition, the Probe Response frame can include an Advertised Service Info Attribute and a Reduced Neighbor Report Attribute. The Advertised Service Info Attribute can identify a specific instance of the P2P service. Information included in the Reduced Neighbor Report Attribute in this example is the same as in Fig. 8A. Furthermore, in this example as well, the Basic Multi-Link Attribute and the information directly indicating that the self-apparatus can execute multi-link communication can be applied.

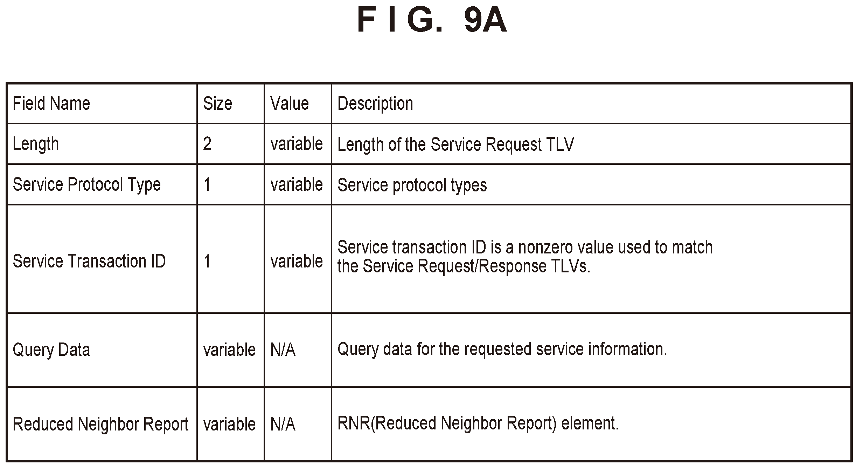

Fig. 9A shows an example of information (Fields) included in the Service Discovery Request frame in the Service Discovery procedure. The Service Discovery Request frame can include a Length Field, a Service Protocol Type Field, and a Service Transaction ID Field. The Length Field can indicate the length of a Query Data Field. The Service Protocol Type Field can store a value indicating a service protocol type. The Service Transaction ID Field can be used to identify a Service Request. In addition, the Service Discovery Request frame can include the Query Data Field and a Reduced Neighbor Report Attribute. The Query Data Field can include the type of service information. In this example, information included in the Reduced Neighbor Report Attribute is the same as in Fig. 8A. In this example as well, the Basic Multi-Link Attribute and the information directly indicating that the self-apparatus can execute multi-link communication can be applied.

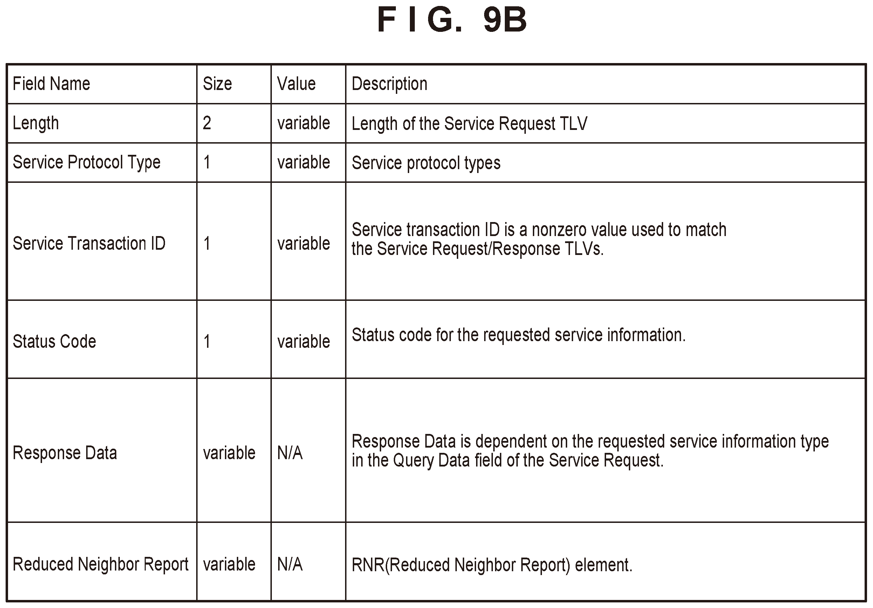

Fig. 9B shows an example of information (Fields) included in the Service Discovery Response frame in the Service Discovery procedure. The Service Discovery Response frame can include a Length Field, a Service Protocol Type Field, and a Service Transaction ID Field. In addition, the Service Discovery Request frame can include a Status Code Field, a Response Data Field, and a Reduced Neighbor Report Attribute. The Status Code Field can indicate the state of a requested service.

The Response Data Field can include information of the corresponding service. In this example, information included in the Reduced Neighbor Report Attribute is the same as in Fig. 8A. In this example as well, the Basic Multi-Link Attribute and the information directly indicating that the self-apparatus can execute multi-link communication can be applied.

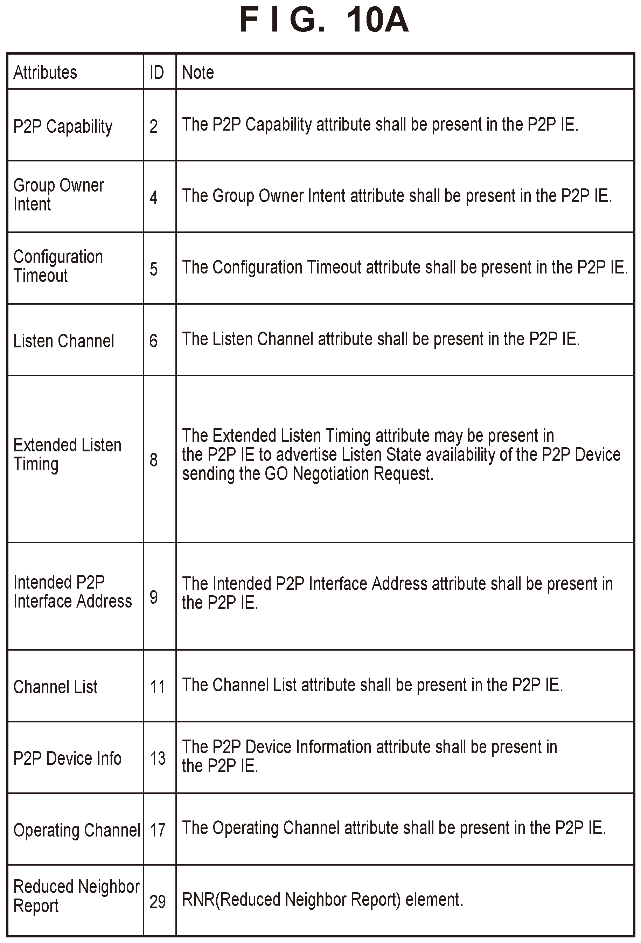

Fig. 10A shows an example of information (Attributes) included in the Go Negotiation Request frame in the group formation procedure. The Go Negotiation Request frame can include a P2P Capability Attribute, a Group Owner Intent Attribute, and a Configuration Timeout Attribute. The Group Owner Intent Attribute can indicate an intent to be a Group Owner. The configuration Timeout Attribute can include a time required by the communication apparatus 100 to shift to the GO or the CL. The Negotiation Request frame can include a Listen Channel Attribute, an Extended Listen Timing Attribute, and an Intended P2P Interface Attribute. The Intended P2P Interface Attribute can include a wireless interface used by the communication apparatus 100 in the P2P Group. Furthermore, the Negotiation Request frame can include a Channel List Attribute and a P2P Device Info Attribute. The Channel List Attribute can include a list of pieces of information of Operating Classes and channel pairs. The Negotiation Request frame can include an Operating Channel Attribute and a Reduced Neighbor Report Attribute. In this example, information included in the Reduced Neighbor Report Attribute is the same as in Fig. 8A. In this example as well, the Basic Multi-Link Attribute and the information directly indicating that the self-apparatus can execute multi-link communication can be applied.

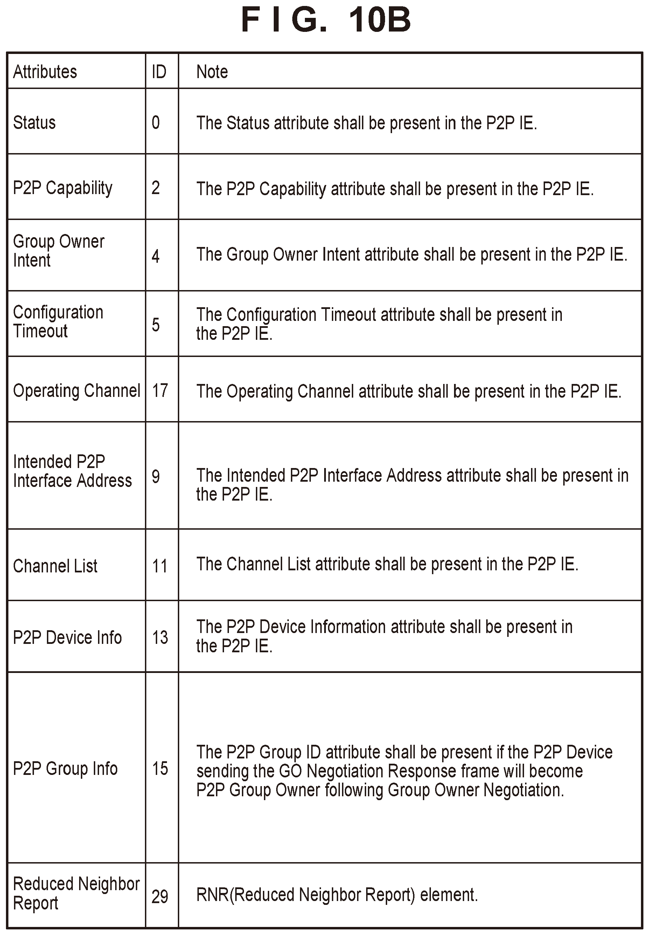

Fig. 10B shows an example of information (Attributes) included in the Go Negotiation Response frame in the group formation procedure. The Go Negotiation Response frame can include a Status Attribute, a P2P Capability Attribute, and a Group Owner Intent Attribute. The Status Attribute can indicate a success or failure status and the reason for it. The Go Negotiation Response frame can include a Configuration Timeout Attribute and an Operating Channel Attribute. In addition, the Negotiation Response frame can include an Intended P2P Interface Attribute, a Channel List Attribute, and a P2P Device Info Attribute. The Negotiation Response frame can include a P2P Group Info Attribute and a Reduced Neighbor Report Attribute. In this example, information included in the Reduced Neighbor Report Attribute is the same as in Fig. 8A. In this example as well, the Basic Multi-Link Attribute and the information directly indicating that the self-apparatus can execute multi-link communication can be applied.

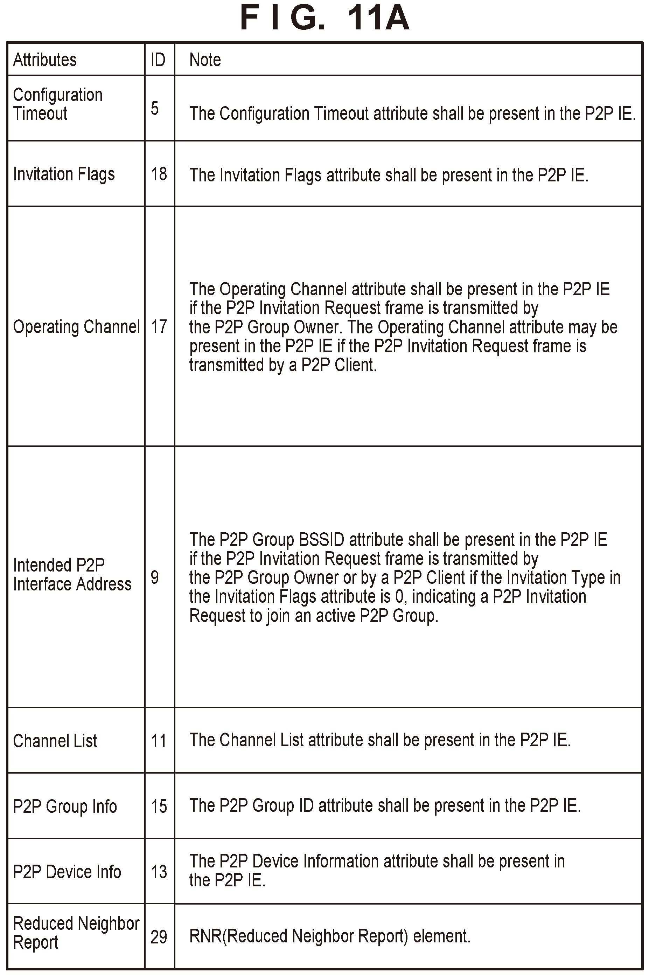

Fig. 11A shows an example of information (Attributes) included in the Invitation Request frame in the P2P Invitation procedure. For example, the P2P Invitation procedure can be used by the GO in the existing P2P Group to invite a new STA to the P2P Group. The Invitation Request frame can include a Configuration Timeout Attribute, an Invitation Flags Attribute, and an Operating Channel Attribute. The Invitation Flags Attribute can include flags in the P2P Invitation procedure. In addition, the Invitation Request frame can include an Intended P2P Interface Attribute, a Channel List Attribute, and a P2P Group Info Attribute. The Invitation Request frame can also include a P2P Device Info Attribute and a Reduced Neighbor Report Attribute. In this example, information included in the Reduced Neighbor Report Attribute is the same as in Fig. 8A. In this example as well, the Basic Multi-Link Attribute and the information directly indicating that the self-apparatus can execute multi-link communication can be applied.

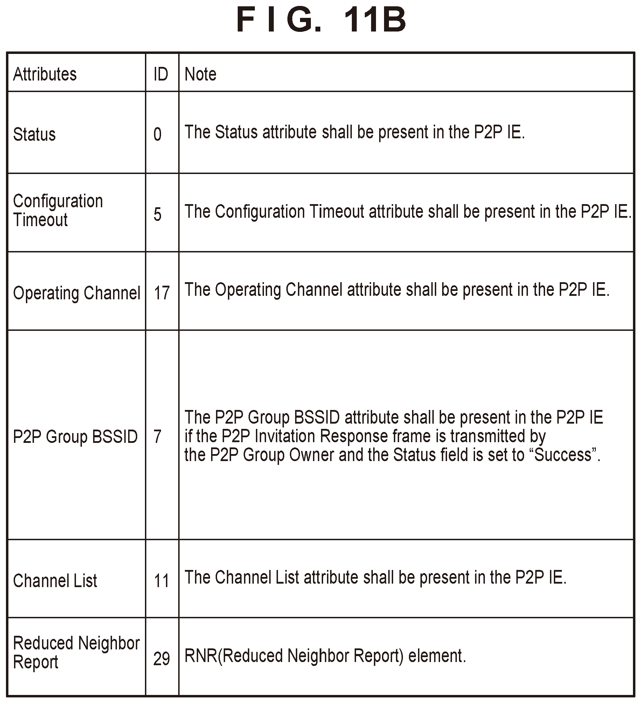

Fig. 11B shows an example of information (Attributes) included in the Invitation Response frame in the P2P Invitation procedure. The Invitation Response frame can include a Status Attribute, a Configuration Timeout Attribute, and an Operating Channel Attribute. In addition, the Invitation Response frame can include a P2P Group BSSID Attribute, a Channel List, and a Reduced Neighbor Report Attribute. The P2P Group BSSID Attribute can include a BSSID (Basic Service Set Identifier) used by the GO of the P2P Group. In this example, information included in the Reduced Neighbor Report Attribute is the same as in Fig. 8A. In this example as well, the Basic Multi-Link Attribute and the information directly indicating that the self-apparatus can execute multi-link communication can be applied.

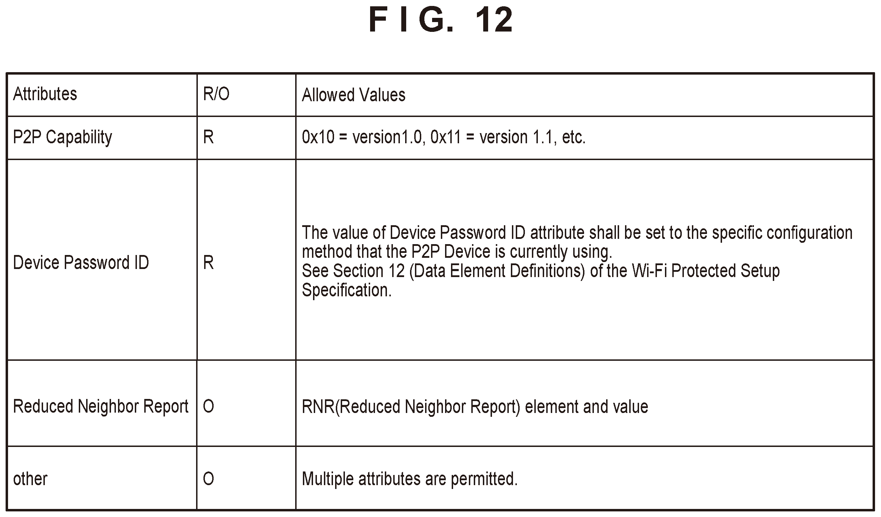

Fig. 12 shows an example of information (Attributes) included in the EAP Request frame or EAP Response frame in the WPS procedure. The EAP Request frame or EAP Response frame can include a P2P Capability Attribute, a Device Password ID Attribute, and a Reduced Neighbor Report Attribute. In this example, information included in the Reduced Neighbor Report Attribute is the same as in Fig. 8A. In this example as well, the Basic Multi-Link Attribute and the information directly indicating that the self-apparatus can execute multi-link communication can be applied. Note that an Other Attribute in Fig. 12 may be used as information indicating that the self-apparatus can execute multi-link communication.

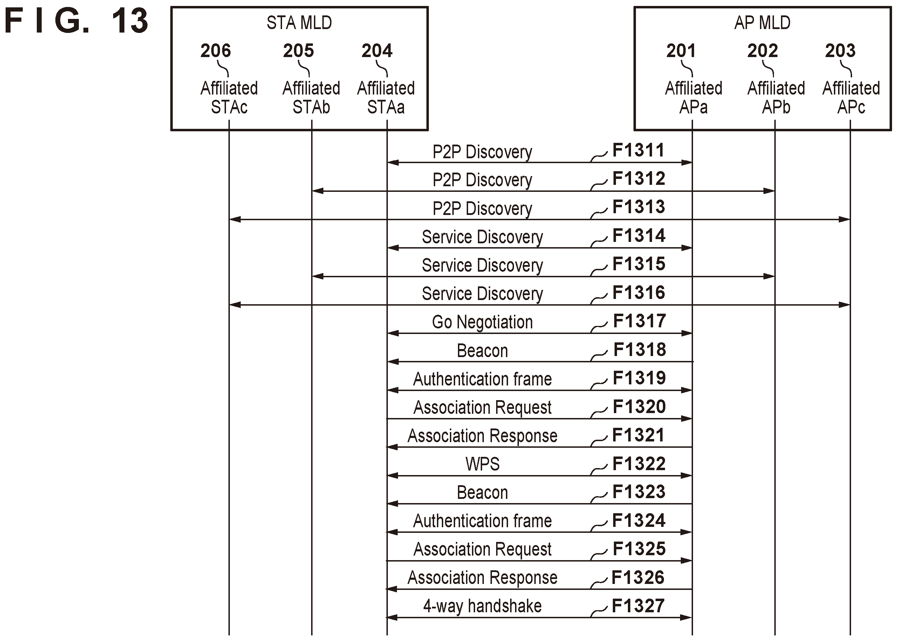

If the partner communication apparatus supports multi-link communication, the communication apparatus 100 can execute subsequent WFD processing using some A-APs or A-STAs included in the self-apparatus without using the remaining A-APs or A-STAs. For example, if the communication apparatus 100 includes a plurality of communication circuits capable of forming individual links in multi-link communication, the communication apparatus 100 can execute subsequent WFD processing using some of the plurality of communication circuits. In this case, the communication apparatus 100 does not execute the subsequent processing using the remaining communication circuits among the plurality of communication circuits. At this time, some communication circuits are those corresponding to some of the links used in multi-link communication. For example, the communication apparatus 100 can execute the subsequent WFD processing using one of the A-APs or A-STAs included in the self-apparatus. Fig. 13 shows an example in which the communication apparatus 101 and the communication apparatus 102 execute the processing from the group formation procedure between the A-APa 201 and the A-STAa 204. That is, in the P2P Discovery procedure or the Service Discovery procedure, the communication apparatus 101 and the communication apparatus 102 can notify and acquire whether the partner communication apparatus supports multi-link communication. First, the communication apparatus 101 and the communication apparatus 102 execute the P2P Discovery procedure and the Service Discovery procedure using the A-APs and A-STAs respectively included in the communication apparatuses 101 and 102. The Service Discovery procedure may be optional. For example, each A-AP or A-STA attempts to detect the partner communication apparatus by repeating the Search state and the Listen state for each of frequency channels on which the self-apparatus can operate (F1311 to F1316). Note that in this example, the communication apparatus 101 operates as an AP MLD and the communication apparatus 102 operates as an STA MLD on the assumption that the communication apparatus 101 serves as a GO and the communication apparatus 102 serves as a CL. Note that in the WFD processing, the AP MLD, the STA MLD, the A-AP, and the A-STA may be referred to as other expressions. For example, the Probe Request frame or Probe Response frame transmitted in the P2P Discovery procedure can include the RNR element and the Basic Multi-Link element. Furthermore, the Service Discovery Request frame or Service Discovery Response frame in the Service Discovery procedure can include the RNR element and the Basic Multi-Link element. Note that if a location where information to be set after the WFD processing or establishment of the multi-link should be stored is present in each of these elements, a temporary value can be stored. For example, if a frequency channel used between the communication apparatuses is set after the WFD processing, the Operation Class field 305, the Channel Number field 306, and the like may not be decided at the time of the P2P Discovery procedure. In this case, a value of zero or a predetermined value can be stored in these fields. If the received Probe Request frame or Probe Response frame includes the Basic Multi-Link element, the communication apparatus 100 may determine, regardless of the contents of the element, that the partner communication apparatus supports multi-link communication. Note that the communication apparatus 100 may include, not in the Probe Request frame but in the Probe Response frame, information for notifying whether multi-link communication can be executed. For example, in response to reception of the Probe Request frame from the communication apparatus 102, the communication apparatus 101 can transmit the Probe Response frame including the Basic Multi-Link element. Then, if the communication apparatus 102 detects that the received Probe Response frame includes the Basic Multi-Link element, it can notify, in the subsequent WFD processing, that the self-apparatus supports multi-link communication. For example, the communication apparatus 102 can transmit the Go Negotiation Request frame including the Basic Multi-Link element using one of the A-STAs. In the P2P Discovery procedure or the Service Discovery procedure, the communication apparatus 101 and the communication apparatus 102 may decide a combination of the A-AP and the A-STA that should establish each link. For example, when one of the A-APs of the communication apparatus 101 returns the Probe Response frame in response to the Probe Request frame transmitted by one of the A-STAs of the communication apparatus 102, it can be decided that the combination of the A-AP and the A-STA establishes one link. In the P2P Discovery procedure or the Service Discovery procedure, the communication apparatus 101 and the communication apparatus 102 need not decide the combination of the A-AP and the A-STA that should establish each link. For example, when one of the A-APs of the communication apparatus 101 returns the Probe Response frame in response to the Probe Request frame from one of the A-STAs of the communication apparatus 102, it may be decided only that the subsequent WFD procedure be executed by the combination of the A-AP and the A-STA. In this case, the communication apparatus 101 and the communication apparatus 102 can decide the combination of the A-AP and the A-STA that forms each link in the subsequent procedure. With this configuration, since it is possible to detect the partner communication apparatus by concurrently using the plurality of A-APs or A-STAs of each communication apparatus 100, it is possible to quickly complete the P2P Discovery procedure or the Service Discovery procedure. Then, the communication apparatus 101 and the communication apparatus 102 can execute the subsequent procedure using one of the combinations of the detected A-APs and A-STAs.

Subsequently, the communication apparatus 101 and the communication apparatus 102 execute the group formation procedure (F1317). At this time, the communication apparatus 101 and the communication apparatus 102 can execute the group formation procedure using some of the A-APs or A-STAs of each communication apparatus. For example, the group formation procedure can be executed between the A-APa 201 and the A-STAa 204. That is, in the group formation procedure between the A-APa 201 and the A-STAa 204, the group formation procedure between the A-APb 202 and the A-STAb 205 and the group formation procedure between the A-APc 203 and the A-STAc 206 can also be executed. In this case, for example, negotiation using Go Negotiation can be performed so that the A-APa 201, the A-APb 202, and the A-APc 203 commonly serve as GOs and the A-STAa 204, the A-STAb 205, and the A-STAc 206 commonly serve as CLs (F1317). As an example, based on the decision that the A-APa 201 serves as a GO and the A-STAa 204 serves as a CL, the roles of the remaining A-APs and the remaining A-STAs can be decided. Then, P2P Group Session by the same procedure as in F414 to F418 of Fig. 4 can be executed between the A-APa 201 and the A-STAa 204 (F1318 to F1322). In addition, based on completion of the group formation procedure between the A-APa 201 and the A-STAa 204, it is considered that the group formation procedures between the remaining A-APs and the remaining A-STAs are complete. For example, it can be considered that the group formation procedure between the A-APb 202 and the A-STAb 205 and the group formation procedure between the A-APc 203 and the A-STAc 206 are also complete. In this case, the A-STAa 204 can store, in the Go Negotiation Request frame, the Basic Multi-Link element including information of a link to be used for the multi-link. Then, the A-APa 201 can store, in the Go Negotiation Response frame, the Basic Multi-Link element including information of a link permitted to be used for the multi-link. By exchanging these frames, negotiation necessary for multi-link communication can be completed in the group formation procedure. Note that this comprehensive group formation procedure is not limited to execution between the A-APa 201 and the A-STAa 204 and may be executed between another A-AP and another A-STA. Furthermore, the present invention is not limited to a case where each A-AP of the communication apparatus 101 serves as a GO and each A-STA of the communication apparatus 102 serves as a CL, and the role of a GO or CL need only be unified in each communication apparatus.

The A-APa 201 and the A-STAa 204 can execute the subsequent WFD procedure (F1318 to F1327) as in F414 to F423 of Fig. 4. For example, the A-APa 201 can transmit a Beacon frame including the Basic Multi-Link element and the RNR element based on the decision that the A-APa 201 serves as a GO (F1323). Furthermore, the A-STAa 204 can transmit an Association Request frame including the Basic Multi-Link element based on the decision that the A-STAa 204 serves as a CL (F1325). In addition, upon receiving the Association Request frame, the A-APa 201 transmits an Association Response frame including information of a link to be used for multi-link communication, and then the A-STAa 204 receives the Association Response frame, thereby establishing the multi-link (F1326). In this way, in the WFD processing, information indicating whether the partner communication apparatus can execute multi-link communication is acquired, thereby making it possible to share and execute the WFD processing. This can improve the efficiency of the WFD processing and avoid a status in which the roles of the GO and the CL are mixed between the communication apparatuses. Note that by exchanging the Go Negotiation Request frame and the Go Negotiation Response frame, exchange of information necessary to establish the multi-link between the communication apparatuses 100 can be completed. In this case, the communication apparatus 100 need not notify the partner communication apparatus of the Basic Multi-Link element and the RNR element in the subsequent WFD procedure (F1318 to F1327). This can avoid exchange of duplicate information and efficiently use frequency resources.

Note that an example in which the WFD processing from the group formation procedure is executed between a pair of the A-AP and the A-STA has been described but the present invention is not limited to this. For example, in the group formation procedure, information indicating whether the partner communication apparatus can execute multi-link communication may be acquired and the subsequent processing may be executed between a pair of the A-AP and the A-STA. As an example, the Go Negotiation Request frame, the Go Negotiation Response frame, and the Go Negotiation Confirm frame can be used to notify whether multi-link communication can be executed. In this case, to unify the role of the GO or CL in each communication apparatus, cooperative processing can be executed between the plurality of A-APs belonging to the AP MLD or the plurality of A-STAs belonging to the STA MLD. For example, after deciding to serve as a GO or a CL among the plurality of A-APs or the plurality of A-STAs, the Go Negotiation Request frame or Go Negotiation Response frame can be sent. For example, the WFD control unit 606 can decide the role of the self-apparatus, and instruct each A-AP or each A-STA.

Furthermore, the communication apparatus 100 may acquire, in the P2P Discovery procedure, information indicating whether the partner communication apparatus can execute multi-link communication, and execute processing from the Service Discovery procedure between a pair of the A-AP and the A-STA. If it is determined that the partner communication apparatus can execute multi-link communication, the communication apparatus 100 may notify that the self-apparatus can execute multi-link communication. If the partner communication apparatus cannot execute multi-link communication, it is possible to reduce frequency resources that would be consumed by making a notification of information concerning multi-link communication.

Note that the communication apparatus 100 can perform processing from the first procedure (for example, the P2P Discovery procedure) of the WFD processing by some A-APs or A-STAs used in multi-link communication. That is, if the communication apparatus 100 includes a plurality of communication circuits capable of forming individual links in multi-link communication, the communication apparatus 100 can perform notification or acquisition of specifying information using some of the plurality of communication circuits. In this case, the communication apparatus 100 does not perform notification or acquisition of specifying information using the remaining communication circuits among the plurality of communication circuits. Note that some communication circuits correspond to some of the links used in multi-link communication. For example, the communication apparatus 100 transmits the Probe Request frame including the Basic Multi-Link element and the RNR element using one of the A-APs or A-STAs. Upon receiving the Probe Request frame, the partner communication apparatus returns the Probe Response frame including the Basic Multi-Link element and the RNR element. If information indicating that multi-link communication can be executed is acquired by exchanging these pieces of information, the communication apparatus 100 comprehensively executes the subsequent WFD processing using one of the A-APs or A-STAs. For example, the partner communication apparatus is notified of the Service Discovery Request frame or Go Negotiation Request frame including information of a link desired by the self-apparatus to establish the multi-link. In response to this, the partner communication apparatus makes a notification including information of a link permitted to establish the multi-link. This allows the communication apparatus 100 to efficiently establish the multi-link to the partner communication apparatus without causing duplicate processing among the links.

As described above, according to this embodiment, the communication apparatus 100 performs, in a predetermined procedure for establishing a link between STAs, notification or acquisition of specifying information for specifying whether the partner communication apparatus can execute multi-link communication. Then, based on the specifying information indicating that the partner communication apparatus can execute multi-link communication, the communication apparatus 100 establishes a plurality of links by the predetermined procedure. By exchanging, in the procedure of establishing a link between STAs, the specifying information for specifying that multi-link communication can be executed, it is possible to efficiently establish a multi-link using some wireless I/Fs. Thus, when establishing a multi-link between STAs, it is possible to improve efficiency of the processing and avoid a status in which the roles of the respective wireless I/Fs are not unified between the communication apparatuses.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2024-006983 filed January 19, 2024, which is hereby incorporated by reference herein in its entirety.

## Claims

1. A communication apparatus comprising:
execution means for executing, in a case where the communication apparatus operates as a station complying with an IEEE 802.11 standard series and another communication apparatus operates as a station complying with the IEEE 802.11 standard series, a predetermined procedure for establishing a link to the other communication apparatus without intervention of an access point complying with the IEEE 802.11 standard series,
wherein the execution means acquires, in the predetermined procedure, specifying information for specifying whether the other communication apparatus can execute multi-link communication for performing communication between stations using a plurality of links, and establishes a plurality of links in the predetermined procedure based on the specifying information indicating that the other communication apparatus can execute the multi-link communication.

2. The communication apparatus according to claim 1, wherein the execution means acquires the specifying information using at least one of a Reduced Neighbor Report element and a Basic Multi-Link element.

3. The communication apparatus according to claim 1 or 2, wherein the execution means acquires the specifying information by receiving the specifying information included in at least one of a frame used for a Device Discovery procedure complying with a Wi-Fi Direct standard, a frame used for a Service Discovery procedure, a frame used for a Group Formation procedure, a frame used for a P2P invitation procedure, and a frame used for Wi-Fi Protected Setup.

4. The communication apparatus according to any one of claims 1 to 3, wherein
the communication apparatus includes communication means including a plurality of communication circuits capable of forming individual links in the multi-link communication,
the execution means
acquires the specifying information using some communication circuits among the plurality of communication circuits, and
does not acquire the specifying information using remaining communication circuits among the plurality of communication circuits, and
the some communication circuits correspond to some of the links used in the multi-link communication.

5. The communication apparatus according to any one of claims 1 to 4, wherein
the communication apparatus includes communication means including a plurality of communication circuits capable of forming individual links in the multi-link communication,
the execution means
executes the predetermined procedure using some communication circuits among the plurality of communication circuits, and
does not execute the predetermined procedure using remaining communication circuits among the plurality of communication circuits, and
the some communication circuits correspond to some of the links used in the multi-link communication.

6. A communication apparatus comprising:
execution means for executing, in a case where the communication apparatus operates as a station complying with an IEEE 802.11 standard series and another communication apparatus operates as a station complying with the IEEE 802.11 standard series, a predetermined procedure for establishing a link to the other communication apparatus without intervention of an access point complying with the IEEE 802.11 standard series,
wherein the execution means makes, in the predetermined procedure, a notification of specifying information for specifying whether the communication apparatus can execute multi-link communication for performing communication between stations using a plurality of links, and establishes a plurality of links in the predetermined procedure based on a fact that the communication apparatus can execute the multi-link communication.

7. The communication apparatus according to claim 6, wherein the execution means acquires specifying information for specifying whether the other communication apparatus can execute the multi-link communication, and establishes a plurality of links in the predetermined procedure based on the specifying information indicating that the other communication apparatus can execute the multi-link communication.

8. The communication apparatus according to claim 6 or 7, wherein the execution means makes a notification of the specifying information using at least one of a Reduced Neighbor Report element and a Basic Multi-Link element.

9. The communication apparatus according to any one of claims 6 to 8, wherein the execution means makes a notification of the specifying information by transmitting the specifying information included in at least one of a frame used for a Device Discovery procedure complying with a Wi-Fi Direct standard, a frame used for a Service Discovery procedure, a frame used for a Group Formation procedure, a frame used for a P2P invitation procedure, and a frame used for Wi-Fi Protected Setup.

10. The communication apparatus according to any one of claims 6 to 9, wherein
the communication apparatus includes communication means including a plurality of communication circuits capable of forming individual links in the multi-link communication,
the execution means
makes a notification of the specifying information using some communication circuits among the plurality of communication circuits, and
does not make a notification of the specifying information using remaining communication circuits among the plurality of communication circuits, and
the some communication circuits correspond to some of the links used in the multi-link communication.

11. The communication apparatus according to any one of claims 6 to 10, wherein
the communication apparatus includes communication means including a plurality of communication circuits capable of forming individual links in the multi-link communication,
the execution means
executes the predetermined procedure using some communication circuits among the plurality of communication circuits, and
does not execute the predetermined procedure using remaining communication circuits among the plurality of communication circuits, and
the some communication circuits correspond to some of the links used in the multi-link communication.

12. A control method executed by a communication apparatus, comprising:
executing, in a case where the communication apparatus operates as a station complying with an IEEE 802.11 standard series and another communication apparatus operates as a station complying with the IEEE 802.11 standard series, a predetermined procedure for establishing a link to the other communication apparatus without intervention of an access point complying with the IEEE 802.11 standard series,
wherein specifying information for specifying whether the other communication apparatus can execute multi-link communication for performing communication between stations using a plurality of links is acquired in the predetermined procedure, and a plurality of links are established in the predetermined procedure based on the specifying information indicating that the other communication apparatus can execute the multi-link communication.

13. A control method executed by a communication apparatus, comprising:
executing, in a case where the communication apparatus operates as a station complying with an IEEE 802.11 standard series and another communication apparatus operates as a station complying with the IEEE 802.11 standard series, a predetermined procedure for establishing a link to the other communication apparatus without intervention of an access point complying with the IEEE 802.11 standard series,
wherein a notification of specifying information for specifying whether the communication apparatus can execute multi-link communication for performing communication between stations using a plurality of links is made in the predetermined procedure, and a plurality of links are established in the predetermined procedure based on a fact that the communication apparatus can execute the multi-link communication.

14. A program for causing a computer to function as each means of a communication apparatus defined in any one of claims 1 to 11.
